# EUROPEAN PATENT APPLICATION

(11) **EP 2 871 598 A1**
(43) Date of publication of application: **13.05.2015**
(21) Application number: 13192407.8
(22) Date of filing: 12.11.2013
(51) Int. Cl.: G06Q 10/04, G06Q 50/06, G05B 13/04

(54) **System and method for optimizing the management of a gas transportation network**

(71) Applicant: Regasificadora del Noroeste, S.A., 15620 Mugardos A Coruna (ES)
(72) Inventor: Abuín Mosquera, Jose Manuel, 15620 Mugardos A Coruña (ES); Bermúdez de Castor López-Varela, Alfredo, 15620 Mugardos A Coruña (ES); González Díaz, Julio, 15620 Mugardos A Coruña (ES); González Dieguez, Francisco José, 15620 Mugardos A Coruña (ES); González Rueda, Ángel Manuel, 15620 Mugardos A Coruña (ES); Raña Míguez, Paula, 15620 Mugardos A Coruña (ES)
(74) Representative: Carvajal y Urquijo, Isabel

(57) **Abstract**

System and method for optimizing the management of a gas transportation network, comprising:
- an input system (1) for generating an optimization scenario with the topology, design variables, control parameters, operation ranges and consumption arrangement of the network,
- a gas transportation network computer optimization system (2) with an optimization module (22) which has physical models which reproduce the behaviour of the gas and the network elements, responsible for:
- relaxing the physical modules (404) to obtain a candidate solution (412) that resolves the physical problem faced according to constraints on the optimization scenario and optimization aims.
- transforming the candidate solution into a solution accordig to the physical constraints of the problem.

The system might comprise a tariffs module (23) to calculate network transportation costs.

## Description

### Field of the invention

The present invention pertains to the field of optimizing the management of gas transportation networks. This invention is specifically related to the use of an optimizer to improve decision making when it comes to controlling the operation of a gas transportation network.

### Background of the invention

Given their very nature, gas transportation networks occupy vast expanses of land, which, depending on the area in which they are located, may be measured in thousands of kilometers. They are generally managed from a control center by the Technical System Manager (TSM) based on the data they receive from the various elements that form a network, namely: regulation and measuring stations, compression stations, pressure control valves, flow control valves, closing valves, regasification plants, international connections, underground storage units, deposit fields and switch positions.

When combined, the size of the network and the number of elements that form it therefore make managing the same complex. Furthermore, the compression stations and regasification plants use the gas itself as an internal power source, thereby consuming their own resources. For this reason, it is necessary to pay particular attention to the way in which a network is managed.

Currently, the aim of managing a gas transportation network is to meet all consumer demands, without considering the energy cost. In other words, the aim is to guarantee the security of the supply, independently of its associated costs.

Since highly important strategic infrastructure is being considered, it is not possible to carry out tests on the management of the network, which would require it to be either totally or partially closed down. Even if this were possible, running tests on the network directly would result in very high energetic and monetary costs being incurred, thereby minimizing potential savings that could be achieved as a result of the tests carried out.

Moreover, the distribution of the areas with greater or lesser demand constantly changes, meaning that a network configuration may be optimal in certain situations but in others, may not even be suitable for guaranteeing the security of the supply.

As can be seen, the efficient management of the network is not an easy task and it is therefore necessary to use an external tool which serves to support the TSM. Said tool should be based on a simulator, which reproduces the physical behavior of the gas via the gas pipeline network, as well as on the technical characteristics of the other network elements, namely: compression stations, pressure control valves, flow control valves, closing valves, regasification plants, international connections, underground storage units and deposit fields.

Another problem related to the management of a gas transportation network is the application of a tariff system for the agents participating in the same. On a European level, many of the European Union member countries are reconsidering the methodologies they use to obtain the tariffs charged for the use of and access to gas transportation networks, in order to follow a number of guidelines and regulations from the 3^{rd} EU Energy Package.

In recent years, software models have been developed to optimize gas transportation networks, which either prioritized calculation time at the expense of precision or centered on the precision of the results without taking the amount of computational time into account. Moreover, no software which makes it possible to calculate the tariffs system associated to a gas transportation network is known about, according, for example, to the various methodologies proposed by the European Union via the 3^{rd} EU Energy Package.

Therefore, the invention to be presented below serves to assist network managers in making decisions. This invention makes it possible to reduce energy consumption, always guaranteeing the security of the supply and maintaining a balance between the precision of the results and the computational time taken. What is more, the invention also offers the possibility of establishing a reference tariffs system for the network agents.

### Description of the invention

The object of the present invention is a system and method for optimizing the management of a gas transportation network, which resolves the abovementioned problems.

A first aspect of the invention refers to the optimization system, which comprises:
- an input system, responsible for generating an optimization scenery, said optimization scenery including the following information:
   - the topology of the gas transportation network,
   - design variables to establish a certain network configuration,
   - network control parameters, with data obtained by network measuring stations,
   - operation ranges for the design variables and control parameters,
   - the consumption arrangement registered by network measuring stations,
- a gas transportation network optimization computer system, which in turn comprises an optimization module, which has physical modules that reproduce the behavior of the gas and the network elements, said optimization module being configured to:
   - receive the optimization scenery,
   - relax the physical models to obtain at least one candidate solution, which resolves the physical problem faced, in accordance with the constraints imposed on the optimization scenery and with the optimization objectives,
   - transform the candidate solution into a solution which adjusts to the true nature of the problem, which may also be applied directly to the management of the network.

In a particular embodiment, the input system comprises:
- a plurality of remote terminal units, which receive data on measurements obtained in the gas transportation network via sensors,
- at least one data acquisition system charged with receiving said measurement data,
- a database for storing said measurement data, based on which the consumption disposition is obtained.

The optimization module preferably comprises:
- a candidate solution selection module, configured to obtain at least one candidate solution,
- a candidate solution translation module, configured to receive the updated optimization scenery with the candidate solution and transform the candidate solution into a solution which adapts to the true nature of the problem.

The candidate solution selection module may be configured to relax the physical modules by means of linearizing the constraints imposed on the optimization scenery. Said module may in turn be configured to iteratively obtain solutions to the physical problem and a relaxation update for the physical model according to said candidate solution, until it fulfills a stopping criteria.

In order to transform the candidate solution, the candidate solution translation module may be configured to employ the gradients of the design variables relative to the control parameters and the operation ranges.

The optimization module is preferably configured to simultaneously obtain various candidate solutions, each one with an initial relaxation of the different physical models and to select the candidate solution which best adapts to the optimization aim as the final candidate solution.

In a preferred embodiment, the gas transportation network optimization computer system comprises a tariffs module for calculating the costs incurred to send a flow unit from any input point in the network to any output point in the network and from the associated tariffs system.

A second aspect of the present invention refers to a method for optimizing the management of a gas transportation network. The method comprises the following steps:
- generating an optimization scenery, which includes the following information:
   - the topology of the gas transportation network,
   - design variables to establish a certain network configuration,
   - network control parameters, with data obtained by network measuring stations,
   - operation ranges of the design variables and the control parameters,
   - the consumption arrangement registered by the network measuring stations
- relax a number of physical models, which reproduce the behavior of the gas and the network elements to obtain at least one candidate solution, which resolves the physical problem faced, in accordance with the constrains imposed on the optimization scenery and with the optimization aims,
- transform the candidate solution into a solution which adjusts to the true nature of the problem and which may be applied directly to the management of the network.

The method may comprise iteratively obtaining solutions to the physical problem and a relaxation update for the physical model according to said candidate solution, until a stopping criteria is fulfilled.

The process may comprise simultaneously obtaining various candidate solutions, each one with an initial relaxation of the various physical models and selecting the candidate solution which best adapts to the optimization aim as the final candidate solution.

Transforming the candidate solution into a solution which adapts to the true nature of the problem may be carried out by means of employing the gradients of the design variables relative to the control parameters and the operation ranges.

In a particular embodiment, the method comprises calculating the costs incurred to send a flow unit from any input point of the network to any output point of the network and of the associated tariffs system.

The design variables may comprise, amongst others:
- the compression rate of the compression stations,
- the decompression rate of the pressure control valves,
- the volume prescribed in the flow control valves,
- the state of the closing valves
- the volume emitted by the regasification plants,
- the volume imported or exported via the international connections,
- the volume extracted or injected in the underground storage units and
- the volume extracted in the deposit fields.

The control parameters may comprise, amongst others:
- the temperature of the gas,
- the pressure of the gas,
- the volume and direction of the gas flow in a certain gas pipeline and
- the composition of the gas.

### Brief description of the drawings

Below is a brief description of a series of drawings which facilitate a better understanding of the invention and are expressly related to an embodiment thereof, presented as a non-limiting example of the same.
Figure 1 represents an *optimization scenery* with all the associated data, parameters, variables and ranges from which it is formed.
Figure 2 is a general diagram of the invention with two clearly differentiated parts, namely the input system and the gas transportation network optimization computer system.
Figure 3 is a diagram of the gas transportation network optimization computer system.
Figure 4 is a flow diagram of the candidate solution selection module.
Figure 5 is a flow diagram of the tariffs module.
Figure 6 is a flow diagram showing the operation of the present invention.

### Detailed description of the invention

A gas transportation network is composed of its topology and the elements which form it. Specifically, the topology is defined by means of the gas pipeline connections and the physical properties of the same, namely the length, diameter, roughness, geographic coordinates, etc.

The elements that form part of a gas transportation network may be divided into two groups, namely those which serve to obtain information in real time on that which is occurring at certain points in the network and those with which it is possible to interact to modify the network configuration. Within the first group, the regulation and measuring stations can basically be found, whilst the second group would encompass the remaining network elements, i.e. compression stations, pressure control valves, flow control valves, closing valves, regasification plants, international connections, underground storage units and deposit fields.

In this second group defined above, the parameters with which it is possible to interact are referred to as *design variables,* which serve to establish a certain network configuration. Therefore, the *design variables* are: the compression rate of the compression stations, the decompression rate of the pressure control valves, the volume prescribed in the flow control valves, the closing or opening of the closing valves, the volume emitted by the regasification plants, the volume imported or exported via the international connections, the volume extracted or injected in the underground storage units and the volume extracted in the deposit fields.

In addition, the regulation and measuring stations make it possible to obtain data on other network parameters, known as *control parameters.* Given that these stations are usually placed at strategic points in the gas transportation network, various embodiments of the invention may include the temperature and the pressure of the gas, the amount and direction of the gas flow in a certain gas pipeline and the composition of the gas in this assembly.

In order to complete the information needed for the optimization, a series of constraints would be imposed on the range in which the *design variables* defined above should operate. The *control parameters* will also have a number of ranges in which it is possible to operate. It must be noted that both the *design variable* ranges and the *control parameter* ranges will be determined by the technical characteristics of the associated elements.

Finally, the consumption at each one of the gas transportation network points would have to be included, given that these would be variables across time. The consumption disposition at a specific moment is referred to as *consumption arrangement.*

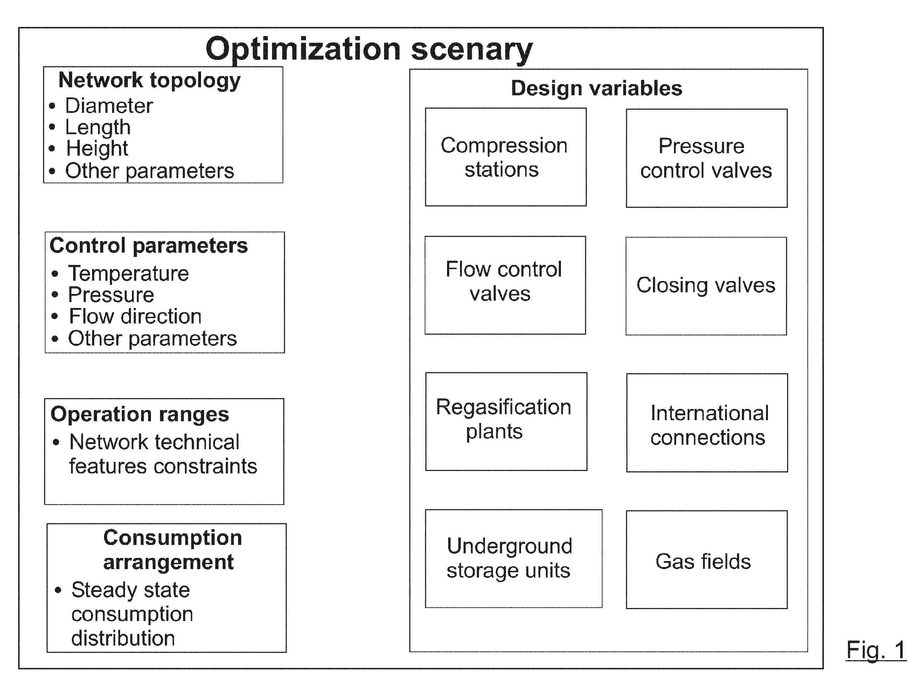

All the information defined in the above paragraphs forms an *optimization scenery.* In other words, an *optimization scenery* is formed by the network topology, the *design variables,* the *control variables,* the ranges in which they can operate and the *consumption arrangement.* In **Figure 1****,** an outline with the concepts included in an *optimization scenery* is provided as an example.

As an aim of the optimization, the criteria of efficiency which may be imposed when it comes to improving the management of the network may be, amongst others, to reduce the independent consumption of gas in the compression stations and/or the regasification plants (a cost known as *boil-off*).

The way in which this independent consumption is reduced would be by minimizing the use of these elements, thus obtaining a network management configuration where only the strictly necessary elements operate and work as little as possible. As regards the compression stations, this aim would be achieved by selecting the lowest number of stations necessary in order to guarantee the security of the supply and, in turn, compress with compression rates which imply less independent consumption. As regards the regasification plants, independent consumption is linked to emission and the aim is therefore to achieve the lowest emission whilst always guaranteeing the security of the supply.

It must be noted that the search for these aims is carried out in a general way, in such a way that the total cost of this configuration for the network management is optimal. Please note that during the optimization process, a balance is established between all the efficiency criteria, which is why the optimization of each one of the elements is not sought after on an individual level, but rather in a collaborative way.

Regarding the *optimization scenery,* the invention is divided into two systems described below:
- Input system (1),
- Gas transportation network computer optimization system (2).

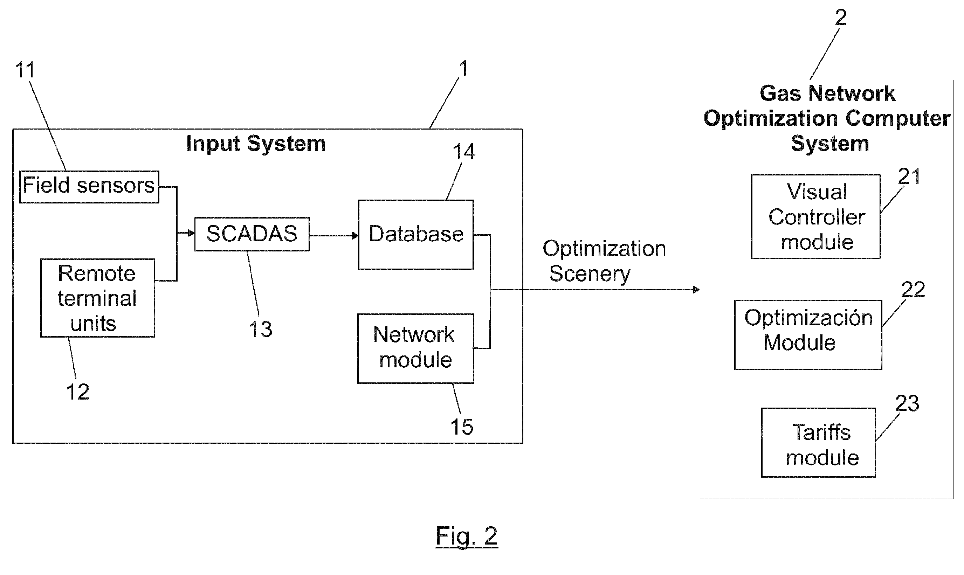

In **Figure 2****,** the input system (1) is represented, which serves as a data input and pre-processing system for the gas transportation network computer optimization system (2). Below, the interaction between the various which form the input system (1) is explained.

The regulation and measuring stations usually have remote terminal units (12), which receive data from the measurements obtained by means of the sensors (11) and communicate this data to one or more data acquisition systems or SCADAs (13). As known by experts in this field, SCADAs are computer based systems which collect and analyze data in real time. In this invention, SCADAs send the data received with the measurements to a database (14).

This database (14) stores the data records in real time. Using all of this data and a time interval determined by the user, the *consumption arrangement* is formed, which represents the consumptions registered by means of the regulation and measuring stations. This *consumption arrangement* may be constructed using the consumption measurement over the chosen time interval, the average or any other mathematical temporal data treatment technique. The aim of this type of *consumption arrangement* is to obtain a representative stationary state in the gas transportation network.

However, this is not the only possible data supply route for the database. The information may be provided by means of the network module (15) directly for data delivery services located in computer networks, both internal and external, pertaining to official bodies, governments, private companies, etc. with data on the consumption at the points of their gas transportation networks. By way of example, the communication protocol in this case may be HTTPS on TCP/IP, although any expert in the field of computer network communications could make the connection in an alternative way.

All the information regarding an *optimization scenery* is packaged in a data representation format, for example XML format. As already mentioned above, within this data representation format, the information composed by the network topology, the *design variables,* the *control parameters,* the ranges in which they can operate and the *consumption arrangement* are included.

Once the *optimization scenery* has been packaged in the suitable data representation format, it is passed to the gas transportation network computer optimization system (2). Please note that communication between the remote terminal units (12), the sensors (11), the SCADAs (13), the database (14) and the gas transportation network computer optimization system (2) may be made using communication links to a local or external network, as known about by experts in this field.

As can be seen in Figure 2, the gas transportation network computer optimization system (2) receives the *optimization scenery* from the input system (1) in a certain data representation format.

In the embodiment of the invention, a computer based system is used to run various modules in order to optimize the management of a gas transportation network. These modules generally include subroutines, programs, components, data structures and other types of structures which carry out certain tasks or implement certain types of abstract data. The main module of the program serves to optimize the management of a gas transportation management network in a stationary state. The computer based system also includes other additional program modules, such as the module for calculating the tariffs system of a gas transportation network.

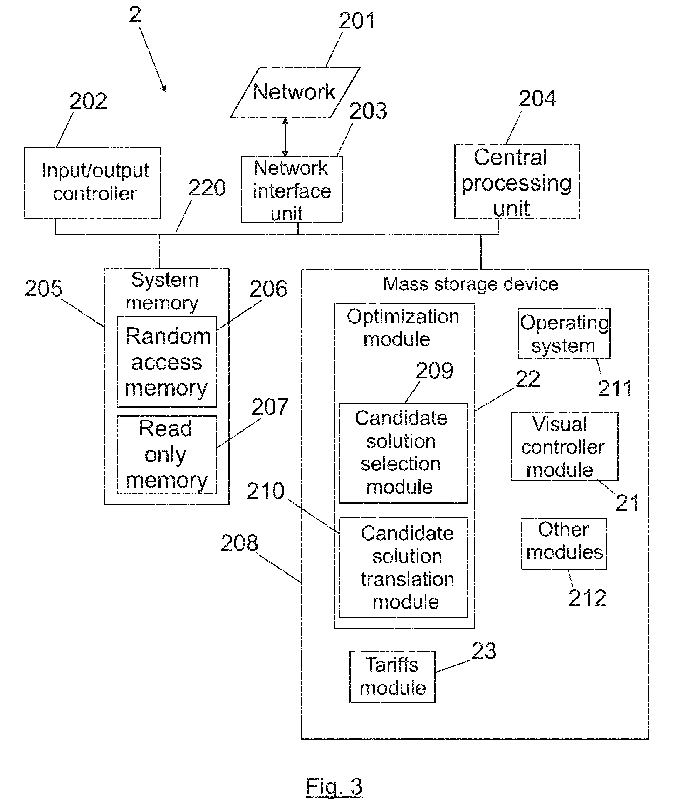

In **Figure 3****,** it is possible to observe an outline of the gas transportation network computer optimization system (2) architecture. Said architecture represents a desktop computer or conventional laptop, including a central processing unit or CPU (204), a memory system (205) composed of random access memory or RAM (206) and read only memory or ROM (207) and a bus system (220), which couples the memory system (205) to the CPU (204). In addition, it has a network interface unit (203) for connection to a network (201) and an input/output controller (202), which contains subroutines which are essential for helping to transfer information between elements within a computer.

The gas transportation network computer optimization system (2) furthermore includes a mass storage device (208) for storing an operating system (211), an optimization module (22) for managing a gas transportation network, in turn divided into a candidate solution selection module (209) and a candidate solution translation module (210); a tariffs module (23) for the gas transportation network, a visual controller module (21) and other program modules (212). These modules shall be described in greater detail in the forthcoming sections.

It must be noted that the computer based system used to materialize the invention may be based on other system configurations, for example mobile systems, multi-processer systems, programmable electronic devices, mini-computers, servers, clusters and other systems of this kind. The invention may also be materialized in distribution computing environments, where the tasks are carried out by means of remote processing devices linked via a communications network. In a distribution computing environment, the program modules may be stored in both local and remote storage devices.

The mass storage device (208) is connected to the CPU (204) via the mass storage controller (not shown in the diagram), which is connected to the bus (220). The mass storage device (208) and its computer support provide non-volatile storage for the computer based system. Although the description of the computer support presented herein refers to a mass storage device, such as a hard disc or a CD-ROM unit, it must be noted that experts in this field would be able to achieve the same functionality with any available support that may be accessed by a computer system.

By way of a non-limiting example, the computer support may comprise a storage system and a communications system. The computer storage support includes volatile and non-volatile, extractable and non-extractable storage, implemented in any method or technology, to store information such as instructions which can be interpreted by a computer, data structure, program modules and other data. The computer storage support includes RAM, ROM, EPROM, EEPROM, flash memories or other solid state technologies, CD-ROM, DVD, Blu-ray or other optical storage methods, magnetic strips, magnetic storage discs or any other means which may be used to store the desired information and which may be accessed by means of the computer based system.

Regarding the possible embodiments of the invention, the computer based system may operate in a network environment using logical connections to remote computers, databases and other devices via the network (201). The computer based system may be connected to the network (201) via a network interface unit (203) connected to the bus (220). The connections which can be made via the network interface unit (203) may include local area network connections or LAN or wide area network connections or WAN. LAN and WAN network environments are common in offices, company computer networks, intranet and internet networks. It must be noted that the network interface unit (203) may also be used to connect to other types of networks and remote computers. The computer based system may also include an input/output controller (202) for receiving and processing an input from other devices, amongst them a keyboard, mouse, stylus or touch screen (not shown in the diagram). Similarly, the input/output controller (202) may provide output to a screen, a printer or other kinds of output device.

As previously mentioned, some of the modules which form the gas transportation network computer optimization system (2) may be stored in a mass storage device (208) of the computer based system, including an operating system (211) suitable for controlling the operation of a personal computer connected to the communications network (201). The mass storage device (208) and the RAM (206) may also store one or many modules of the program.

The visual controller module (21) forms part of the gas transportation network computer optimization system (2). The main function of the visual controller module (21) is to edit and visualize the *optimization scenery.* Therefore, this module uses the data representation format used to package the *optimization scenery* with the aim of registering any changes made during editing.

It must be noted that in certain embodiments of the invention, it may be possible to automate this process and for the communication between the visual controller module (21) and the optimization module (22) to be direct, without any waiting time in the *optimization scenery* editing process.

In this invention, the data representation system is also valid for saving the results generated by the optimization module (22). Thanks to this property, the visual controller module (21) makes it possible to visualize the results generated by the invention.

The visual controller module (21) also makes it possible to show the results generated by the tariffs module (23), therefore completing the visualization with all the data that interacts with the invention.

Additionally, the visual controller module (21) may use geographic information systems or GIS to represent the gas transportation network data on geographic maps. Please note that communication between the visual controller module (21) and the GIS may be established using communication links in a local or external network in a way known about by experts in this field via the network interface unit (203).

The optimization module (22) forms part of the gas transportation network computer optimization system (2). The main function of the optimization module (22) is to optimize the *optimization scenery.*

The optimization module (22) interacts with the visual controller module (21) and with the tariffs module (23) by means of the *optimization scenery.* The visual controller module (21) sends the *optimization scenery* to the optimization module (22), which optimizes and updates the *optimization scenery.* Following this, the user may choose whether they want to send the *optimization scenery* to the tariffs module (23). If they chose not to, the *optimization scenery* will once again pass to the visual controller module (21) to visualize the results. As a result, the optimization module (22) uses the data representation format used to package the *optimization scenery* as an input and output format.

The need for an optimization tool based on simulation in order to prevent the problems brought about by carrying out tests on the management of a gas transportation network directly has been mentioned above. For this reason, the optimization module is based on mathematical models which reproduce the behavior of the gas and the remaining elements in the gas transportation network via the fluid mechanics, the physics, chemistry and other mathematical tools.

As well known by experts in this field, these mathematical models lead to non-linear equations, the solution to which comes at a high computational cost, especially when applying them to the optimization of the management of gas transportation networks. Therefore, the optimization module (22) uses two optimization stages, thus being dived into the following modules, as shown in Figure 3:
- Candidate solution selection module (209),
- Candidate solution translation module (210).

In the first stage, the candidate solution selection module (209) receives the *optimization scenery.* The main property of this module is that it employs a relaxation of the original model and therefore requires less computational effort. Using this information an initial optimization is carried out in which a candidate solution is selected. The *optimization scenery* is therefore updated with the active design variables and with a number of initial values for each one of them.

In the second stage, the candidate solution translation module (210) receives the *optimization scenery* updated with the candidate solution. This module fine tunes and transforms the candidate solution into a solution which adapts to the true nature of the problem, which may also be applied to the management of the network directly.

The fundamental requirement of the optimization module (22) is to guarantee the security of the supply. In other words, the solution must satisfy the demand of all consumers. Therefore, both the compression stations and the regasification plants must work within the limits established by their technical characteristics.

In addition, the optimization module (22) will deal with the configuration of the underground storage units, of the international connections and of the gas fields. In this way, the technical manager of the system is able to know if it is really necessary to use the gas in the storage units to guarantee the security of the supply, import/export gas from the international connections or extract gas from the deposit fields.

Regarding the remaining elements in the gas transportation network, the candidate solution selection module (209) is responsible for the administration of the compression stations and the various network values; the latter are the pressure control valves, the flow control valves and the closing valves.

As already mentioned above, the operation costs, understood to mean the gas consumed independently in both the regasification plants and the compression stations, may be the aim of the optimization.

However, the optimization module (22) may be replicated for any efficiency criteria of interest, simply by changing the aim of the optimization in the problem. Other efficiency criteria may include maximizing or minimizing the export or import of gas in certain areas of the gas network, maximizing emission of a regasification plant, etc.

The candidate solution selection module (209) forms part of the optimization module (22). It concerns the first optimization stage.

The candidate solution selection module (209) takes the *optimization scenery* that the visual controller module (21) sent to the optimization module (22). The candidate solution selection module (209) interacts with the candidate solution translation module (210) by means of the *optimization scenery.* As a result, the candidate solution selection module (209) employs the data representation format used to package the *optimization scenery* as an input and output format.

The main aim of this module is to choose a solution that represents a suitable and efficient configuration for managing the gas transportation network. An efficient configuration of the network is understood to be, for instance, a configuration in which the consumption of gas is minimized in the compression stations or in the regasification plants.

As previously mentioned, the optimization problem associated with the search for an optimal solution in a gas network uses equations based on physical models on fluid mechanics and chemical processes. The solution of said equations requires great computational effort but in this module, a relaxation of the same will be carried out in order to facilitate the search for candidate solutions.

A fundamental step of the candidate solution selection module (209) is the relaxation of the physical models of the problem, which facilitates the solution of the physical constraints associated to the problem, the difficulty of which is mainly derived from the non-linearities they present. For this reason, one way of relaxing the physical modules would be to linearize said constraints in such a way that in the end it is necessary to resolve a linear programming problem. Naturally, the linearization may be carried out in many ways, some of which may be more efficient than others depending on the type of restriction in question.

If the optimization module (22) is considered to be an assembly of modules, it must be noted that the candidate solution selection model (209) would not make sense alone, given that it is necessary to carry out a post-process to guarantee that the physical constraints of the problem are verified effectively. This process would be carried out in the candidate solution translation module (210), which is explained in detail below. All the information provided by the candidate solution will be extremely useful when it comes to running the candidate solution translation module (210), given that it would be fixing the bases to establish a physical solution to the problem, without which it could not be carried out.

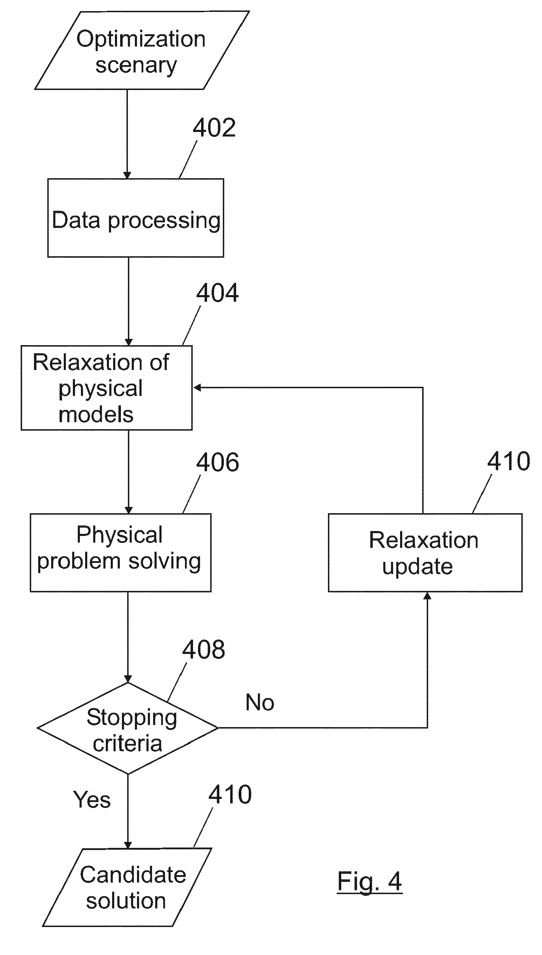

The operation of the candidate solution selection module (209) is presented in detail in **Figure 4****.** Firstly, the *optimization scenery* which was sent to the optimization module (22) is received by the visual controller module (21). In this step, all the data (402) needed to carry out said selection is extracted, including the data related to the network topology, the *design variables,* the *control parameters,* the ranges in which they can operate and the *consumption arrangement.*

Once all of the necessary data is available, a simplification or relaxation of the physical models (404) of the problem is carried out. Owing to this relaxation, the resulting optimization problem is easier to resolve and therefore, it is easier to find a candidate solution. When it comes to resolving the optimization problem (406), that solution which, for example, obtains less independent consumption in the compression stations and regasification plants is sought after. Nevertheless, the verification of certain constraints must be guaranteed: the compression stations should operate within their operation ranges, the regasification plants must operate within the limits of their technical characteristics, etc.

The next step to be carried out is checking whether a stopping criteria (408) is met. In the event of it not being fulfilled, the relaxation of the physical model (410) is updated by employing the information provided by the solution obtained in the previous step. In this way, the problem relaxation (404) would be adjusted so that it comes closer to the original physical model. The new optimization problem (406) is then resolved, giving rise to a new candidate solution.

Finally, the previous process is repeated until a candidate solution with a number of good properties is found. One stopping criteria (408) that may be used, amongst others, would be to check that the optimization is not being improved by the new candidate solutions being obtained. Please note that in each stage an optimization problem is resolved with a distinct relaxation and therefore, the problems to be resolved are different. This makes it possible to obtain solutions with different object values (i.e. the gas consumed in the compression stations may be different, for example) which would be verified with the stopping criteria (408).

Once the stopping criteria (408) has been verified, the candidate solution (412) obtained by means of this module provides relevant information which may be used in previous methods. Specifically, it updates the *design variables* with the values for the compression rate of the compression stations, the decompression rate of the pressure control valves, the volume prescribed in the flow control valves, the closing and opening of the closing valves, the volume emitted by the regasification plants, the volume imported or exported via the international connections, the volume extracted or injected in the underground storage units and the volume extracted in the deposit fields.

Given the complexity of the physical and chemical equations underlying the gas transportation network model, there is no technique which makes it possible to guarantee an overall optimal solution to the original problem in the state of the art. Therefore, a variation of the overview presented above, which could improve the candidate solution obtained, would be to use multi-boot techniques.

These techniques enable various instances of the candidate solution selection module (209) to be run, each one with an initial relaxation of the distinct model. Finally, the best candidate solution is chosen from all the candidate solutions calculated according to the optimization aim.

The candidate solution translation module (210) forms part of the optimization module (22). It is the second optimization stage.

The candidate solution translation module (210) receives the updated *optimization scenery* from the candidate solution selection module. Once the process has been carried out, the user may choose whether or not they want to send to *optimization scenery* to the tariffs module (23). If they decide not to, the *optimization scenery* will once again pass to the visual controller module (21) to visualize the results. Therefore, the candidate solution selection module (209) employs the data representation format used to package the *optimization scenery* as an input and output format.

The main function of the candidate solution translation module (210) is to generate a solution which adapts to the true nature of the problem, therefore employing mathematical models to this end, which reproduce the behavior of the gas and the remaining elements in the gas transportation network via the fluid mechanics, the physics, the chemistry and other mathematic tools.

As previously mentioned, these mathematical models lead to non-linear equations, the solution to which comes at a high computational cost, especially when they are applied to the optimization of the management of gas transportation networks. However, in the candidate solution translation module (210) this computational cost is reduced because it comes from a candidate solution.

Therefore, with this module, we firstly seek to ensure that the solution created by the invention may be applied directly to the management of the network and secondly try to improve the candidate solution in terms of efficiency. These terms may, for example, be independent consumption at compression stations and regasification plants.

The candidate solution translation model (210) begins to operate by receiving the *optimization scenery* generated by the candidate solution selection module (209) as an input. In said *optimization scenery,* the design variables which are active and a number of initial values for each one of them are pre-determined. More specifically, the values are given for the compression rate of the compression stations, the decompression rate of the pressure control valves, the volume prescribed in the flow control valves, the closing or opening of the closing valves, the volume emitted by the regasification plants, the volume imported or exported via the international connections, the volume extracted or injected in the underground storage units and the volume extracted in the deposit fields.

For the search for an improved solution, in which the promise of approximation to the true nature of the problem is maintained, the candidate solution translation model (210) is supported on the gradients of the *design variables* regarding the *control parameters* and the operation ranges for those directions which mark an improvement in the initial candidate solution to be found.

In addition, please note that each one of the elements in the gas transportation network should be within the operation limits established by their technical characteristics and the security of the supply should be fulfilled, always bearing in mind the premises of the optimization objective.

The tariffs module (23) forms part of the gas transportation network computer optimization system (2). The main function of the tariffs module (23) is to calculate the tariffs at the input and output points of a gas transportation network, in accordance with the current guidelines and regulations.

The tariffs module (23) interacts with the visual controller module (21) and with the optimization module (22) by means of the *optimization scenery.* If the user indicates as such, the optimization module (22) sends the *optimization scenery* to the tariffs module (23), the latter will calculate the tariffs system and update the *optimization scenery.* The *optimization scenery* is then once again passed to the visual controller module (21) to visualize the results. As a result, this tariffs module (23) uses the data representation format used to package the *optimization scenery* as an input and output format.

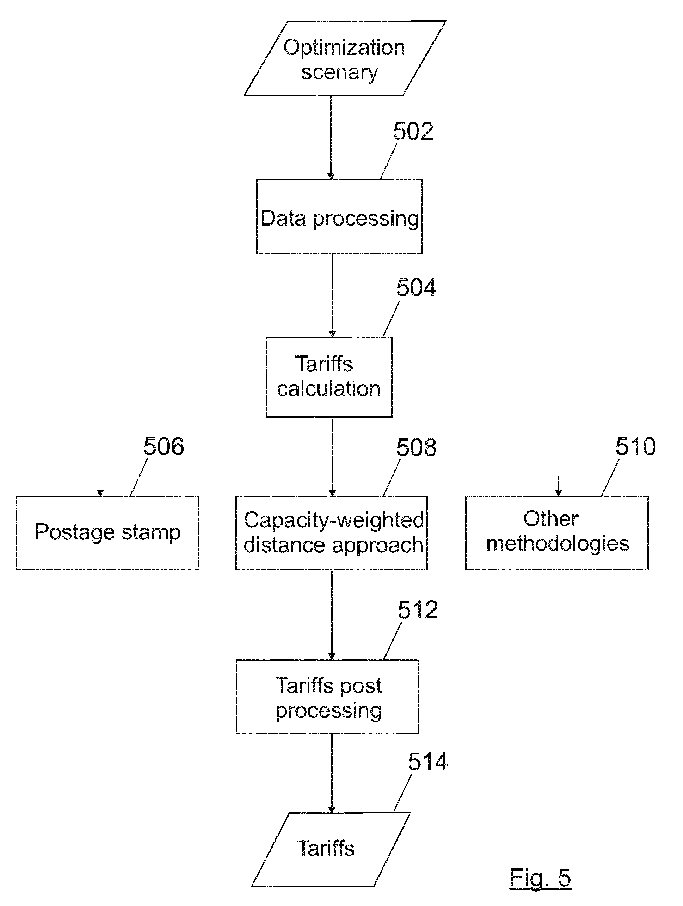

**Figure 5** presents a detailed description of the tariffs module. Firstly, the module receives the *optimization scenery* updated by the optimization module (22) as input. In this stage, all the data needed to make the tariffs system calculations are extracted. Amongst other things, it is necessary to know: how the flows are arranged in the gas transportation network, the costs associated to the network infrastructure (gas pipelines, valves, compression stations, regasification plants, underground storage units, etc.), the *design parameters* of the tariffs system, etc.

All the input data (502) is then processed to obtain a series of elements which will be fundamental in the calculation of the tariffs system. Attending to the *design parameters,* all the costs incurred in the network for sending a flow unit from any input point in the network to an output point are calculated. Some of these design parameters may be: the kinds of costs wished to be employed (real costs, costs based on the technical characteristics of the gas pipelines, etc.) or the factor that determines how much it costs to run a gas pipeline in the opposite direction to the flow (usually referred to as "backhaul" in literature).

Once all of the elements needed are available the tariffs (504) are calculated following various focuses. For example, the methodologies recently published by the Agency for the Cooperation of Energy Regulators (ACER) in their public consultation document entitled "Revised chapter on cost allocation and determination of the reference price of the draft framework guidelines on rules regarding harmonized transmission tariff structures" may be used. Some of these methodologies include "postage stamp" (506), "capacity-weighted distance approach" (508), "virtual point-based approach", "matrix approach" or other methodologies (510).

In the next stage, the tariffs (512) obtained in the previous step are post-processed. Depending on the *design parameters,* various adjustments are made to the tariffs. For example, the tariffs may be rescaled so that the order of their units may be compared to the real costs desired to be assigned or any method could be applied to the tariffs so that they verify a certain dispersion. Finally, the tariffs (514) are obtained according to the established readjustments.

Something to be highlighted in this method is that if there is access to a database containing the necessary information on the gas transportation network in real time, which would be done by means of the input system (1), it would be possible to calculate the tariffs system at each moment. In addition, should you wish to calculate the tariffs system for a given period, one would simply have to predict the behavior of the gas transportation network and calculate the tariffs system at each moment. In this way, the tariffs system established for each concrete period may be a combination of the tariff systems obtained at each moment.

The tariffs module (23) may be interpreted as part of a decision management system. As explained above, this module makes it possible to know how much it would cost to access the gas transportation network at any point of the same and in any fixed period. In this way, for an agent interested in accessing the network, it would be possible to use it as a decisions manager, given that it would facilitate exact knowledge of when and at which point access would be most beneficial.

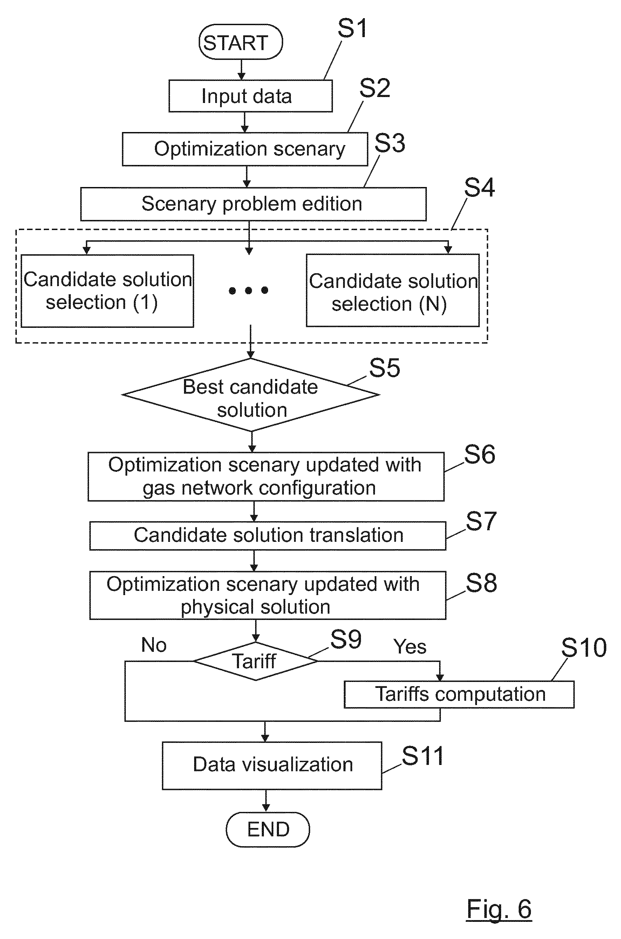

In **Figure 6****,** the explanations given above on the interaction between the various modules of the invention are collected together in a flow diagram. Therefore, the optimization flow for the management of a gas transportation network is as follows:
S1: The input data is received by means of the input system (1) via the various devices from which it is composed.
S2: With the information received in the input system (1), the *optimization scenery* containing the network topology is generated in said system, as well as the *design variables,* the *control parameters,* the ranges in which they can operate and the *consumption arrangement.*
S3: The *optimization scenery* is received by the gas transportation network computer optimization system (2) and within this system, the first to treat it is the visual controller module (21). The visual controller module (21) makes it possible to visualize and edit the *optimization scenery.*
S4: The edited *optimization scenery* is sent to the optimization module (22). Within this module, various instances of the candidate solution selection module (209) are run by means of the multi-boot techniques for obtaining various candidate solutions.
S5: Of the candidate solutions generated in step S4, that which best adjusts to the premises of the optimization aim for the management of the gas transportation network is selected.
S6: Using the candidate solution selected in step S5, the *optimization scenery* is updated. Specifically, the *design variables* are updated with the values for the compression rate of the compression stations, the decompression rate of the pressure control valves, the volume prescribed in the flow control valves, the closing or opening of the closing valves, the volume emitted by the regasification plants, the volume imported or exported via the international connections, the volume extracted or injected into the underground storage units and the volume extracted in the deposit fields.
S7: The candidate solution translation module (210) receives the updated *optimization scenery* with the candidate solution. This module fine tunes and transforms the candidate solution into a solution which adapts to the true nature of the problem and which may be applied to the management of the network directly.
S8: The *optimization scenery* is updated with the physical solution to the problem given in step S7.
S9: The user decides whether or not they wish to calculate the tariffs system associated to the *optimization scenery.* If they decide not to, they will move onto step 11.
S10: The tariffs module (23) receives the *optimization scenery* and calculates the associated tariffs system. Once the calculation has been made, the *optimization scenery* is updated with the tariffs.
S11: The visual controller module (21) receives and shows the *optimization scenery* at the end of the whole process.

## Claims

1. System for optimizing the management of a gas transportation network, **characterized in that** it comprises:
- an input system (1) charged with generating an optimization scenery, said optimizing scenery including the following information:
• the topology of the gas transportation network,
• design variables to establish a certain network configuration,
• network control parameters, with data obtained by the network measuring stations,
• operation ranges of the design variables and the control parameters,
• the arrangement of consumption registered by network measuring stations,
- a gas transportation network computer optimization system (2), which in turn comprises an optimization module (22) which has physical models that reproduce the behavior of the gas and the network elements, said optimization module (22) being configured to:
• receive the optimization scenery,
• relax the physical models (404) to obtain at least one candidate solution (412), which resolves the physical problem faced, according to the constraints imposed on the optimization scenery and the optimization aims,
• transform the candidate solution into a solution which adjusts to the true nature of the problem and which may be applied directly to the management of the network.

2. System according to claim 1, where the input system (1) comprises:
- a plurality of remote terminal units (12), which receive data on measurements obtained in the gas transportation network by means of sensors (11),
- at least one data acquisition system (13), responsible for receiving said measurement data,
- a database (14) for storing said measurement data, based on which the consumption arrangement is obtained.

3. System according to any of the previous claims, where the optimization module (22) comprises:
- a candidate solution selection module (209) configured to obtain at least one candidate solution (412),
- a candidate solution translation module (210), configured to receive the updated optimization scenery with the candidate solution and transform the candidate solution into a solution which is adjusted to the true nature of the problem.

4. System according to claim 3, where the candidate solution selection module (209) is configured to relax the physical models (404) by means of linearizing the constraints imposed on the optimization scenery.

5. System according to any of the claims 3 to 4, where the candidate solution selection module (209) is configured to iteratively obtain solutions to the physical problem (406) and an update the relaxation of the physical model (410), according to said candidate solution until a stopping criteria (408) is fulfilled.

6. System according to any of the claims 3 to 5, where for the transformation of the candidate solution, the candidate solution translation module (210) is configured to employ the gradients of the design variables regarding the control parameters and operation ranges.

7. System according to any of the previous claims, where the optimization module (22) is configured to simultaneously obtain various candidate solutions, each one with an initial relaxation of the different physical models (404) and to select the candidate solution which best adapts to the optimization aim as the final candidate solution.

8. System according to any of the previous claims, where the gas transportation network computer optimization system (2) comprises a tariffs module (23) for calculating the costs incurred to send a flow unit from any input point in the network to any output point in the network and from the associated tariffs system.

9. Method for optimizing the management of a gas transportation network, **characterized in that** it comprises:
- generating an optimization scenery which includes the following information:
• the topology of the gas transportation network,
• design variables to establish a certain network configuration,
• network control parameters, with data obtained by network measuring stations,
• operational ranges of the design variables and the control parameters,
• the consumption arrangement registered by the network measuring stations,
- relax a number of physical models (404) which reproduce the behavior of the gas and the network elements to obtain at least one candidate solution (412), which resolves the physical problem faced according to the constraints imposed in the optimization scenery and with the optimization aims.
- transform the candidate solution into a solution which adapts to the true nature of the problem and which may be applied to the management of the network directly.

10. Method according to claim 9, comprising iteratively obtaining solutions to the physical problem (406) and an update for the relaxation of the physical model (410) according to said candidate solution, until a stopping criteria (408) is met.

11. Method according to any of the claims 9 to 10, which comprises simultaneously obtaining various candidate solutions, each one of which has an initial relaxation of the different physical models (404), and selecting the candidate solution which best adjusts to the optimization aim as the final candidate solution.

12. Method according to any of the claims 9 to 11, where the transformation of the candidate solution into a solution which adjusts to the true nature of the problem is carried out by means of employing the gradients of the design variables regarding the control parameters and the operation ranges.

13. Method according to any of the claims 9 to 12, which comprises calculating the costs incurred to send a flow unit from any input point in the network to any output point in the network and of the associated tariffs system.

14. Method according to any of the claims 9 to 13, where the design variables comprise:
- the compression rate of the compression stations,
- the decompression rate of the pressure control valves,
- the volume prescribed in the flow control valves,
- the state of the closing valves
- the volume emitted by the regasification plants,
- the volume imported or exported via the international connections,
- the volume extracted or injected into the underground storage units and
- the volume extracted in the deposit fields.

15. Method according to any of the claims 9 to 14, where the control parameters comprise:
- the temperature of the gas
- the pressure of the gas
- the volume and flow direction of the gas in a certain gas pipeline and
- the composition of the gas.
